# EUROPÄISCHE PATENTANMELDUNG

(11) **EP 4 737 763 A1**
(43) Veröffentlichungstag der Anmeldung: **06.05.2026**
(21) Anmeldenummer: 24209565.1
(22) Anmeldetag: 29.10.2024
(51) Int. Cl.: F16H 1/20, F16H 57/04

(54) **GETRIEBEEINRICHTUNG**

(71) Anmelder: Deere & Company, Moline, IL 61265 (US)
(72) Erfinder: MORENO, JORGE, 68163 Mannheim (DE); VERGARA MARTINEZ, DANIEL, 68163 Mannheim (DE); GIL, MONICA, 68163 Mannheim (DE); PEREZ RAMIREZ, JAVIER, 68163 Mannheim (DE)
(74) Vertreter: Reichert, Christian

(57) **Zusammenfassung**

Es wird eine Getriebeeinrichtung (10) vorgeschlagen. Die Getriebeeinrichtung (10) umfasst ein den Getrieberaum (17) umgebendes Getriebegehäuse (11), eine im Getrieberaum (17) angeordnete Antriebswelle (18) mit Antriebsverzahnung (44), eine im Getrieberaum (17) angeordnete Vorgelegewelle (38) mit einer ersten und einer zweiten Vorgelegeverzahnung (46, 48) und eine im Getrieberaum (17) angeordnete Abtriebswelle (20) mit Abtriebsverzahnung (50), wobei die Antriebsverzahnung (44) mit der ersten Vorgelegeverzahnung (46) und die zweite Vorgelegeverzahnung (48) mit der Abtriebsverzahnung (50) in Eingriff steht und wobei die Antriebswelle (18) in einem in der Abtriebswelle (20) angeordneten Wellenlager (36) gelagert ist. Es wird vorgeschlagen, dass in einem oberhalb der Abtriebswelle (20) angeordneten Teil des Getriebegehäuses (11) ein im Wesentlichen vom Getrieberaum (17) abgetrennter Hohlraum (52) ausgebildet ist, der über eine entgegen einer Drehrichtung der An- und Abtriebsverzahnung (44, 50) ausgerichteten Öffnung (58) mit dem Getrieberaum (17) verbundenen ist, wobei unterhalb des Hohlraums (52) ein Sammeltrichter (66) angeordnet ist, wobei ferner der Hohlraum (52) wenigstens einen Ablaufkanal (62, 64) umfasst, der in den Getrieberaum (17) zum Sammeltrichter (66) führt und wobei der Sammeltrichter (66) einen Ablauf (84) aufweist, der in einen Bereich des Wellenlagers (36) führt.

## Beschreibung

Die Erfindung betrifft eine Getriebeeinrichtung, mit einem ein Getrieberaum umgebendes Getriebegehäuse, einer im Getrieberaum angeordneten Antriebswelle mit Antriebsverzahnung, einer im Getrieberaum angeordneten Vorgelegewelle mit einer ersten und einer zweiten Vorgelegeverzahnung und einer im Getrieberaum angeordneten Abtriebswelle mit Abtriebsverzahnung, wobei die Antriebsverzahnung mit der ersten Vorgelegeverzahnung und die zweite Vorgelegeverzahnung mit der Abtriebsverzahnung in Eingriff steht und wobei die Antriebswelle in einem in der Abtriebswelle angeordneten Wellenlager gelagert ist.

Im Stand der Technik sind verschiedenste Getriebeeinrichtungen bekannt. Zu den gängigsten Getriebeeinrichtungen gehören beispielsweise Vorgelegegetriebe, der oben genannten Art. Hierbei wird ein Antriebszahnrad eingangsseitig mit einem Vorgelege in Eingriff gebracht und das Vorgelege abtriebsseitig mit einem Abtriebszahnrad. Das Antriebszahnrad und das Abtriebszahnrad sind jeweils auf eigenen Wellen gelagert, wobei das Vorgelege eine gemeinsame Vorgelegewelle aufweist. Um eine kompakte und platzsparende Bauweise zu erreichen, werden die beiden Wellen der Antriebs- und Abtriebszahnräder oftmals ineinander verschachtelt gelagert, so dass beispielsweise ein Wellenlager der Antriebswelle in einem Hohlwellenabschnitt der Abtriebswelle angeordnet und als innenliegendes Wälzlager, beispielsweise als Rollenlager oder auch als Nadellager ausgebildet wird. Bei derartigen Anordnungen und Ausgestaltungen ist aufgrund hoher Relativdrehzahlen zwischen Antriebswelle und Abtriebswelle eine ausreichende Schmierung des innenliegenden Wälzlagers zu gewährleisten, zudem ein Schmiermittelzulauf zum Wälzlager aufgrund der innenliegenden Anordnung ohnehin nur beschränkt möglich ist. Die durch die Rotation der Antriebs- und Abtriebsräder, sowie des Vorgeleges, wird das zur Schmierung und Kühlung vorgesehene Getriebeöl vorwiegend radial nach außen befördert und gelangt unter Umständen nur unzureichend in den Bereich des Wälzlagers. Um dennoch eine ausreichende Schmierung zu gewährleisten, werden üblicherweise Schmiermittelbohrungen vorgesehen, die in der Antriebs- oder Abtriebswelle verlaufen und von äußeren Schmiermittelöffnungen an den Wellenenden bis in den Wälzlagerbereich führen. Über die Schmiermittelöffnungen kann der Wälzlagerbereich dann mit Schmiermittel versorgt werden, indem Schmiermittel unter Druck in die Schmiermittelbohrungen eingeführt und in den Wälzlagerbereich geleitet wird.

Problematisch bzw. nachteilig ist, dass derartige Einrichtungen zur Schmierung des Wälzlagers aufwändig in der Herstellung sind und die Schmierungen regelmäßig oder auch permanent im Betrieb durchgeführt werden müssen.

Die der Erfindung zugrunde liegende Aufgabe wird darin gesehen, eine Getriebeeinrichtung der eingangsgenannten Art anzugeben, durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Getriebeeinrichtung der eingangs genannten Art derart ausgebildet, dass in einem oberhalb der Abtriebswelle angeordneten Teil des Getriebegehäuses ein im Wesentlichen vom Getrieberaum abgetrennter Hohlraum ausgebildet ist, der über eine Öffnung mit dem Getrieberaum verbundenen ist, wobei unterhalb des Hohlraums ein Sammeltrichter angeordnet ist, wobei ferner der Hohlraum wenigstens einen Ablaufkanal umfasst, der in den Getrieberaum zum Sammeltrichter führt und wobei der Sammeltrichter einen Ablauf aufweist, der in einen Bereich des Wellenlagers führt. Die Öffnung des Hohlraums ist entgegen der Drehrichtung der An- und Abtriebsverzahnung ausgerichtet, derart, dass von der An- und Abtriebsverzahnung aufgewirbeltes Getriebeöl in die Öffnung geleitet bzw. transportiert wird bzw. gelangt. Durch die in der Getriebeeinrichtung umwälzende Antriebs- und Abtriebsverzahnung wird das Getriebeöl, mit dem die Getriebeeinrichtung zur Schmierung und Kühlung im Betrieb befüllt ist, aufgewirbelt und im Getrieberaum verteilt. Dabei wird das Getriebeöl insbesondere in Drehrichtung der Antriebs- und Abtriebsverzahnung verteilt und gelangt auf diesem Weg zwangsläufig auch in den Bereich der Öffnung. Dort fließt es über diese in den im Getriebegehäuse ausgebildeten und vom Getrieberaum abgetrennten Hohlraum. Das dorthin geleitete Getriebeöl sammelt sich im Hohlraum und befüllt diesen. Über einen oder mehrere Ablaufkanäle kann das Getriebeöl aus dem Hohlraum abfließen und durch diesen oder diese gezielt in den Sammeltrichter geführt werden. Der Sammeltrichter schirmt das sich dort ansammelnde Getriebeöl von dem im Getrieberaum aufgewirbelten Getriebeöl ab, so dass das im Sammeltrichter sich ansammelnde Getriebeöl ungehindert und gezielt durch den Trichterausgang in den Bereich des Wellenlagers transportiert bzw. geleitet wird. Eine oder mehrere nach herkömmlicher Art in der Antriebs- oder Abtriebswelle ausgebildete Schmiermittelbohrung(en) zur gezielten Schmierung eines Wellenlagers erübrigen sich damit.

Wenigstens ein erster Ablaufkanal, der in den Getrieberaum zum Sammeltrichter führt, kann einen Ausgang umfassen, der auf eine zum Getrieberaum geöffnete und dem Hohlraum zugewandte Trichteröffnung des Sammeltrichters ausgerichtet ist. Das von der Antriebs- oder Abtriebswelle aufgewirbelte Getriebeöl gelangt durch die Öffnung des Hohlraums in den Hohlraum und fließt über den ersten Ablaufkanal aus dem Hohlraum ab. Der Ausgang des ersten Ablaufkanals ist vorzugsweise direkt oberhalb der Trichteröffnung angeordnet, so dass aus dem Hohlraum abfließendes Getriebeöl schwerkraftbedingt von oberhalb in die Trichteröffnung fließt und sich im Sammeltrichter ansammelt, wo es durch die Trichterwandung von dem umherwirbelnden Getriebeöl im Getrieberaum abgeschirmt ist. Von dort aus gelangt das dem Sammeltrichter zugeführte Getriebeöl ungehindert und gezielt über den Ablauf des Sammeltrichters in den Bereich des Wellenlagers.

Der Hohlraum kann einen zweiten Ablaufkanal umfassen, der in den Getrieberaum zum Sammeltrichter führt und durch eine Seitenwand des Sammeltrichters in diesen mündet. Getriebeöl, welches sich im Hohlraum ansammelt, kann über den zweiten Ablaufkanal ungehindert und direkt in einen seitlichen Bereich des Sammeltrichters abfließen und sich ebenfalls im Sammeltrichter ansammeln bzw. den Sammeltrichter befüllen. Das Getriebeöl ist auch hierbei durch die Trichterwandung von dem umherwirbelnden Getriebeöl im Getrieberaum abgeschirmt und gelangt ungehindert und gezielt über den Ablauf des Sammeltrichters in den Bereich des Wellenlagers. Es können weitere Ablaufkanäle vorgesehen sein, die in andere Bereiche oder weitere Seitenwände des Sammeltrichters führen und zur Befüllung des Sammeltrichters mit aus dem Hohlraum abfließendem Getriebeöl beitragen.

Das Wellenlager kann als platzsparendes und kompaktes Nadellager ausgebildet sein, welches hohen Drehzahlen aussetzbar ist und durch die gezielte Schmierung über den Ablauf des Sammeltrichters zuverlässig und wartungsarm geschmiert wird. Andere Wellenlager sind ebenfalls denkbar, beispielsweise Rollenlager oder auch Kugellager.

Die oben beschriebene Getriebeeinrichtung ist auf relative hohe Ausgangsdrehzahlen ausgelegt, insbesondere dadurch, dass die Antriebsverzahnung mit der ersten Vorgelegeverzahnung und/oder die zweite Vorgelegeverzahnung mit der Abtriebsverzahnung eine Übersetzungsstufe mit einem Übersetzungsverhältnis kleiner 1 darstellt. Die Ausgangsdrehzahlen der Abtriebsverzahnung betragen somit ein Vielfaches der Eingangsdrehzahlen der Antriebsverzahnung. Durch die oben beschriebene Anordnung des Hohlraums und dem damit verbundenen Sammelbehälter zur Schmierung und Kühlung der mit hohen Drehzahlen behafteten Wellenlagers können derartige Getriebeeinrichtungen mit einem minimiertem Wartungsaufwand zuverlässig betrieben werden. Aufwändige, in den Antriebsachsen ausgebildete Schmiermittelbohrungen (Schmiermittelkanäle) entfallen. Nichtdestotrotz, kann die Getriebeeinrichtung auch derart ausgebildet sein, dass die Antriebsverzahnung mit der ersten Vorgelegeverzahnung und/oder die zweite Vorgelegeverzahnung mit der Abtriebsverzahnung eine Untersetzungsstufe mit einem Übersetzungsverhältnis größer 1 aufweist, so dass die Ausgangsdrehzahlen der Abtriebsverzahnung somit auch ein Vielfaches niedriger als die Eingangsdrehzahlen der Antriebsverzahnung liegen können.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
Fig. 1 eine perspektivische Seitenansicht einer Getriebeeinrichtung,
Fig. 2 eine erste Querschnittsansicht der Getriebeeinrichtung aus Figur 1,
Fig. 3 eine zweite Querschnittsansicht der Getriebeeinrichtung aus Figur 1,
Fig. 4 eine dritte Querschnittsansicht der Getriebeeinrichtung aus Figur 1 entlang einer in den Figuren 2 und 3 dargestellten Schnittebene A-A,
Fig. 5 eine erste perspektivische Seitenansicht einer Wellen- und Verzahnungseinrichtung der Getriebeeinrichtung aus Figur 1,
Fig. 6 eine zweite perspektivische Seitenansicht der Wellen- und Verzahnungseinrichtung der Getriebeeinrichtung aus Figur 1,
Fig. 7 eine erste perspektivische Seitenansicht eines in der Getriebeeinrichtung aus Figur 1 angeordneten Sammelbehälters und
Fig. 8 eine zweite perspektivische Seitenansicht des in der Getriebeeinrichtung aus Figur 1 angeordneten Sammelbehälters.

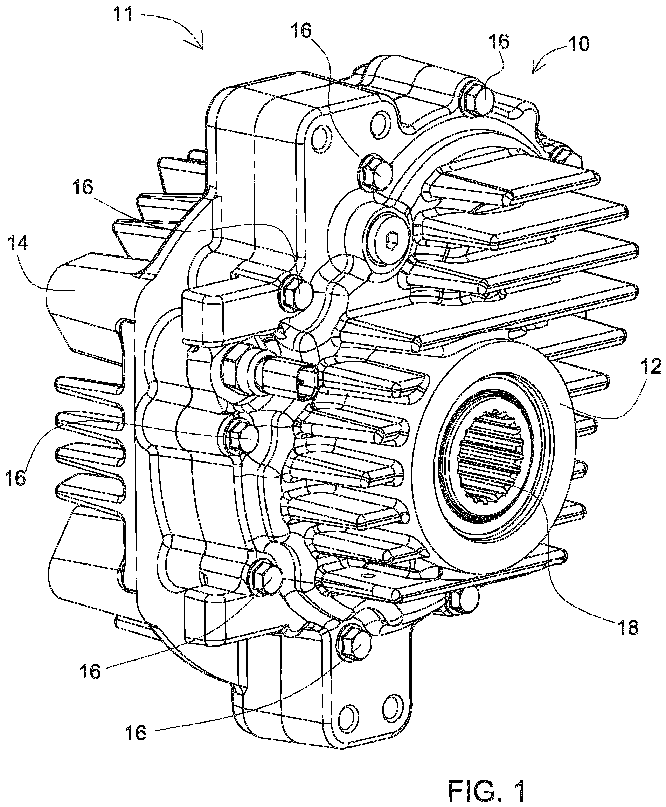

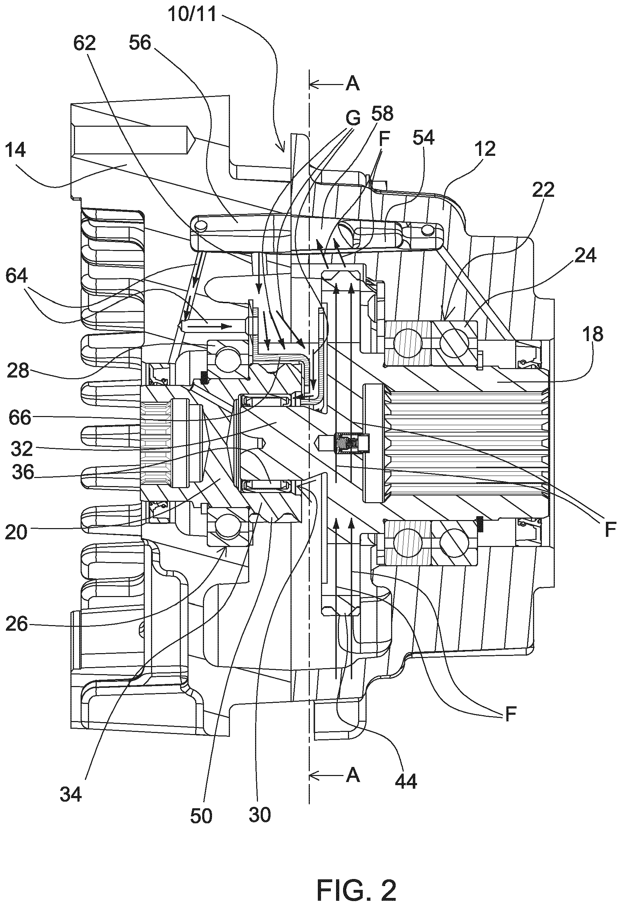

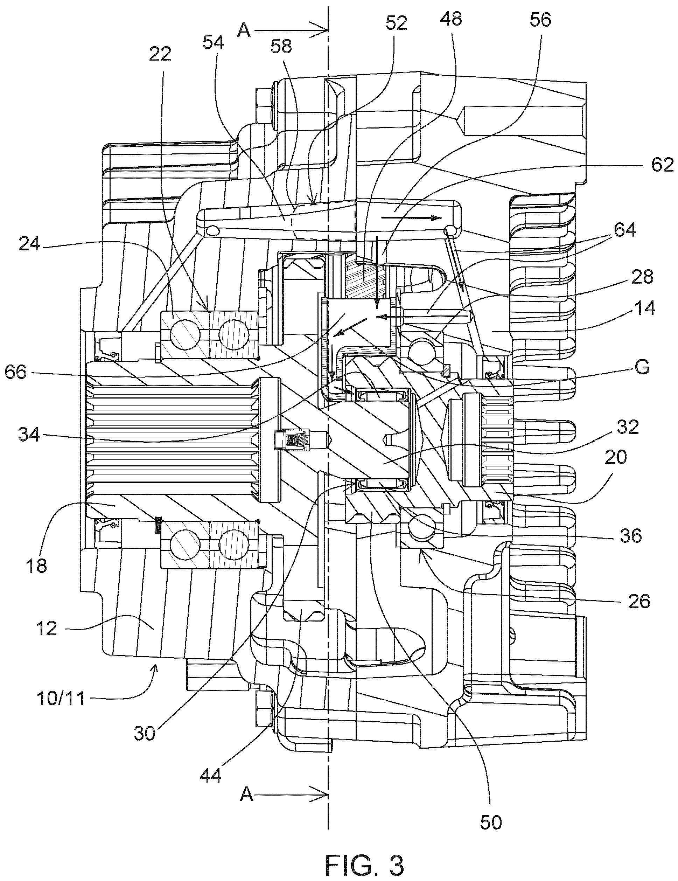

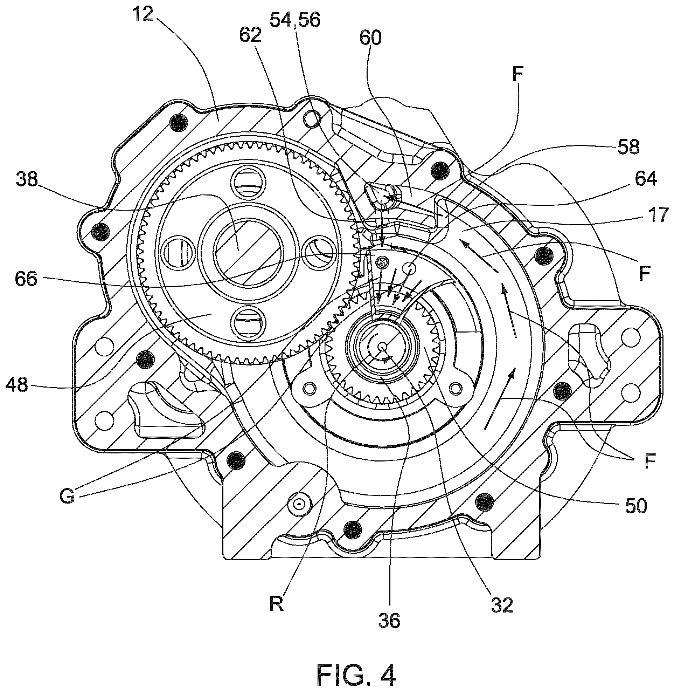

Eine in Figur 1 dargestellte Getriebeeinrichtung 10 umfasst ein Getriebegehäuse 11, welches einen ersten und einen zweiten Getriebegehäuseteil 12, 14 umfasst. Die Getriebegehäuseteile 12, 14 sind über mehrere Getriebegehäusebolzen 16 zusammengefügt und umschließen einen Getrieberaum 17, wie insbesondere in Figur 4 zu erkennen ist. Im ersten Getriebegehäuseteil 12 ist eine Antriebswelle 18 und im zweiten Getriebegehäuseteil eine Abtriebswelle 20 gelagert. Die Lagerung der Antriebs- und Abtriebswellen 18, 20 ist in den Figuren 2 und 3 im Detail zu erkennen. Die Antriebswelle 18 ist an einer ersten antriebswellenseitigen Lagerstelle 22 mittels eines Doppelkugellagers 24 im ersten Getriebegehäuseteil 12 gelagert. Die Abtriebswelle 20 ist an einer ersten abtriebswellenseitigen Lagerstelle 26 mittels eines einfachen Kugellagers 28 im zweiten Getriebegehäuseteil 14 gelagert. Die Antriebswelle 18 und die Abtriebswelle 20 teilen sich des Weiteren eine gemeinsame Lagerstelle 30, die an den jeweiligen axial innenseitig der Getriebeeinrichtung 10 angeordneten Wellenenden 32, 34 der Antriebswelle 18 und der Abtriebswelle 20 in Form eines Nadellagers 36 ausgebildet ist, wobei das Nadellager 36 radial innenseitig die Antriebswelle 18 und radial außenseitig die Abtriebswelle 20 aufnimmt.

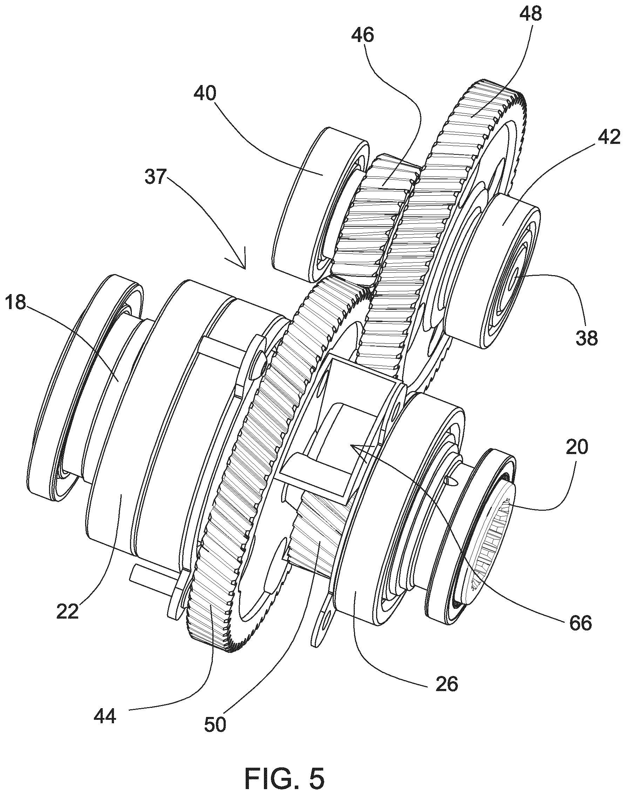

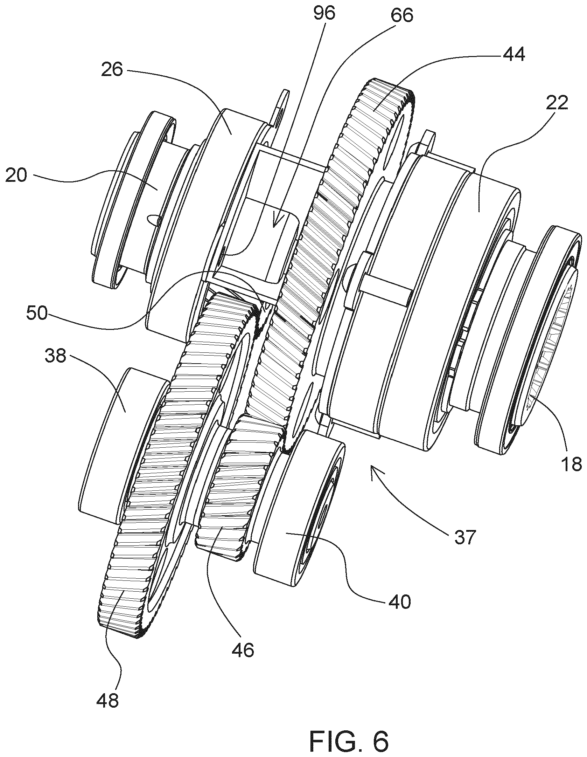

Wie im Detail in den Figuren 5 und 6 gezeigt ist, umfasst die Getriebeeinrichtung 10 ein Wellen- und Verzahnungseinrichtung 37. Die Wellen- und Verzahnungseinrichtung 37 umfasst eine Vorgelegewelle 38, die an einer ersten Lagerstelle 40 im ersten Getriebegehäuseteil 12 und an einer Lagerstelle 42 im zweiten Gehäuseteil 14 gelagert ist. Ferner umfasst die Wellen- und Verzahnungseinrichtung 37 eine auf der Antriebswelle 18 ausgebildete Antriebsverzahnung 44 und eine erste Vorgelegeverzahnung 46, die auf der Vorgelegewelle 38 ausgebildet ist, wobei die Antriebsverzahnung 44 mit der ersten Vorgelegeverzahnung 46 in Eingriff steht. Des Weiteren umfasst die Wellen- und Verzahnungseinrichtung 37 eine an der Vorgelegewelle 38 ausgebildete zweite Vorgelegeverzahnung 48, die drehfest mit der ersten Vorgelegeverzahnung 46 verbunden ist, und eine an der Abtriebswelle 20 ausgebildete Abtriebsverzahnung 50, die mit der zweiten Vorgelegeverzahnung 48 in Eingriff steht. Die Antriebsverzahnung 44 weist einen größeren Durchmesser als die erste Vorgelegeverzahnung 46 auf. Die zweite Vorgelegeverzahnung 48 weist einen größeren Durchmesser als die erste Vorgelegeverzahnung 46 auf. Zudem weist die zweite Vorgelegeverzahnung einen größeren Durchmesser als die Abtriebsverzahnung 50 auf. Damit wird ausgehend von der Antriebswelle 18 hin zur Abtriebswelle 20 eine Übersetzungsverhältnis kleiner als 1 ausgebildet, wodurch die Ausgangsdrehzahlen der Abtriebsverzahnung 50 ein Vielfaches von den Eingangsdrehzahlen der Antriebsverzahnung 44 annehmen.

Wie insbesondere in Figur 4 zu erkennen ist, sind die Antriebsverzahnung 44, die erste Vorgelegeverzahnung 46, die zweite Vorgelegeverzahnung 48 sowie die Abtriebsverzahnung 50 in dem gemeinsamen Getrieberaum 17 angeordnet, wobei in Bezug auf den Getrieberaum 17 die Vorgelegewelle 38 oberhalb der Antriebs- und Abtriebswellen 18, 20 angeordnet ist.

Wie in den Figuren 2, 3 und 4 zu sehen, ist im Getriebegehäuse 11 oberhalb der Antriebs- und Abtriebswellen ein Hohlraum 52 ausgebildet, wobei ein erster Hohlraumteil 54 im ersten Getriebegehäuseteil 12 und ein zweiter Hohlraumteil 56 im zweiten Getriebegehäuseteil 14 ausgebildet ist. Der in Figur 4 dargestellte Querschnitt der Getriebeeinrichtung 10 zeigt eine Ansicht entlang einer in den Figuren 2 und 3 dargestellten Schnittebene A-A, welche im Bereich des ersten Getriebegehäuseteils 12 liegt und eine Ansicht insbesondere auf die zweite Vorgelegeverzahnung 48 und die Abtriebsverzahnung 50 erlaubt. Wie insbesondere in Figur 4 zudem gezeigt, ist oberhalb der Abtriebsverzahnung 50 eine dem Getrieberaum 17 zugewandte Öffnung 58 eines in den Hohlraum 52 führenden Kanals 60 ausgebildet. Die Öffnung 58 ist insbesondere auch in Figur 2 und in Figur 3 (in letzterer in gestrichelter Form) zu erkennen. Die Öffnung 58 ist entgegen einer Drehrichtung R der Antriebs- und der Abtriebsverzahnung 44, 50 ausgerichtet. Sich im Getrieberaum 17 befindliches Getriebeöl wird insbesondere durch die Antriebsverzahnung 44 aufgewirbelt und in Richtung der Öffnung 58 transportiert bzw. bewegt. Auf diesem Wege kann das Getriebeöl aus dem Getrieberaum 17, durch die Öffnung 58 in den Kanal 60 und durch diesen in den Hohlraum 52 geleitet bzw. transportiert bzw. gespült werden, wie die in Figur 2 und 4 dargestellten Pfeile F andeuten. Im Hohlraum 52 kann sich Getriebeöl abgeschirmt vom Getrieberaum 17 ansammeln. Wie ebenfalls in den Figuren 2, 3 und 4 zu erkennen ist, sind ausgehend vom Hohlraum 52 im zweiten Hohlraumteil 56 ein erster und ein zweiter Ablaufkanal 62, 64 ausgebildet, die in den Getrieberaum 17 führen.

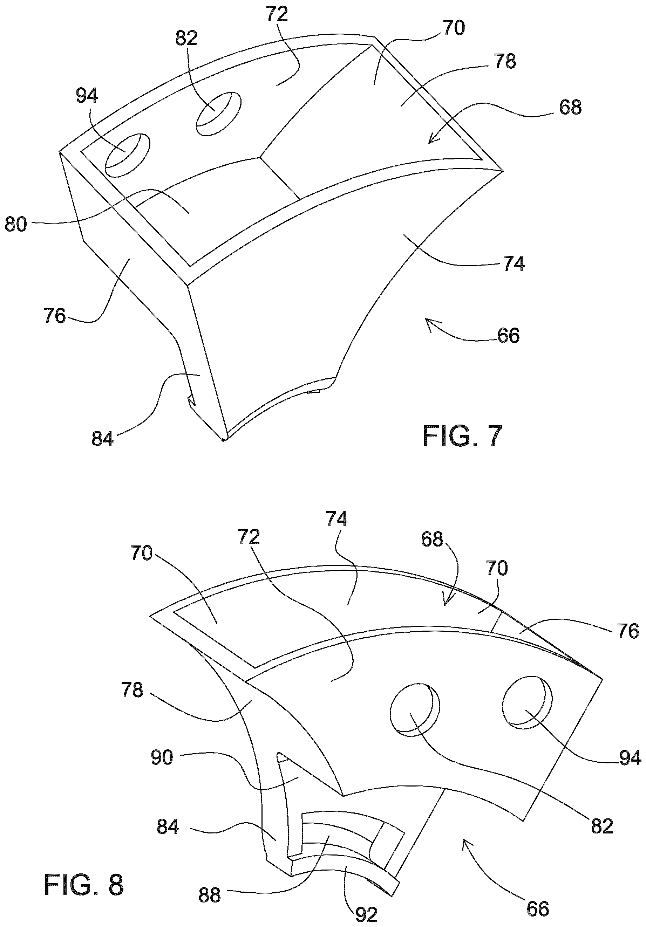

Wie die Figuren 2 bis 6 erkennen lassen, ist oberhalb der Abtriebsverzahnung 50, zwischen Antriebsverzahnung 44 und abtriebswellenseitiger Lagerstelle 26 ein Sammeltrichter 66 angeordnet. Der Sammeltrichter 66 ist im Detail in den Figuren 7 und 8 dargestellt und weist einen trichterförmigen Sammelbereich 68 mit einer zum Hohlraum 52 ausgerichteten Trichteröffnung 70 auf. Des Weiteren ist der Sammelbereich 68 durch vier Seitenwände 72, 74, 76, 78 und einen Boden 80 ausgebildet, die den Sammelbereich 68 gegenüber dem Getrieberaum 17 abschirmen, wobei eine erste Seitenwand 72 an die Lagerstelle 26, eine dazu gegenüberliegende zweite Seitenwand 74 an die Antriebsverzahnung 44 und eine dritte Seitenwand 76 an die zweite Vorgelegeverzahnung 48 angrenzen. Eine vierte Seitenwand 78 trennt den Sammelbereich in Richtung des offenen Getrieberaums 17 ab.

Der erste Ablaufkanal 62 mündet im Getrieberaum 17 unmittelbar oberhalb der Trichteröffnung 70 des Sammeltrichters 66, so dass aus dem Hohlraum 52 abfließendes Getriebeöl schwerkraftbedingt in den Sammeltrichter 66 geleitet wird. Der zweite Ablaufkanal 64 mündet im Getrieberaum 17 seitlich vom Sammeltrichter 66 und leitet eine zusätzliche Menge des aus dem Hohlraum 52 abfließenden Getriebeöls in eine am Sammeltrichter 66 in der ersten Seitenwand 72 vorgesehene Zulauföffnung 82. Die hier beschriebenen zwei Ablaufkanäle 62, 64 dienen beide gleichzeitig dem Abfluss von Getriebeöl aus dem Hohlraum 52 in den Sammeltrichter 66. Es wird darauf hingewiesen, dass auch nur einer der Ablaufkanäle 62, 64 vorgesehen sein kann, der einen Ablauf von Getriebeöl aus dem Hohlraum 52 in den Sammeltrichter 66 bereitstellt.

Der Sammeltrichter 66 weist ferner einen am Boden 80 des Sammelbereichs 68 ausgebildeten Ablauf 84 auf. Der Ablauf 84 führt von einer am Boden 80 des Sammelbereichs 68 angrenzenden Ablaufeingangsöffnung 86 in radialer Richtung entlang eines Zwischenraumes zwischen der Antriebsverzahnung 44 und der Abtriebsverzahnung 50 und mündet mit einer Ablaufausgangsöffnung 88 an der gemeinsamen Lagerstelle 30. Der Ablauf 84 wird durch untere Bereiche der zweiten, dritten und vierten Seitenwand 74, 76, 78, durch eine an der Abtriebsverzahnung 50 angrenzende fünfte Seitenwand 90 und durch einen Ablaufboden 92 geformt, wobei die Ablaufausgangsöffnung 88 in der fünften Seitenwand 90 angrenzend zum Ablaufboden 92 ausgebildet ist. Das aus den Ablaufkanälen 62, 64 in den Sammeltrichter 66 geleitete Getriebeöl sammelt sich im Sammeltrichter 66 an und fließt schwerkraftbedingt über den Ablauf 82 direkt in den Bereich der gemeinsamen Lagerstelle 30 ab bzw. wird dorthin abgeführt.

In der ersten Seitenwand 72 ist zudem eine Befestigungsbohrung 94 vorgesehen, mittels welcher der Sammeltrichter 66 über eine Befestigungsschraube 96 an die Lagerstelle 26 befestigt ist.

Die oben beschriebene Getriebeeinrichtung 10 zeichnet sich dadurch aus, dass dem mit hohen Drehzahlen behaftete gemeinsame Wellenlager der Antriebs- und Abtriebswelle 18, 20 gezielt Getriebeöl zugeführt wird (siehe Pfeile F und G), wobei sich im Getrieberaum 17 befindliches Getriebeöl durch die Antriebsverzahnung 18 aufgewirbelt und in Richtung der Öffnung 58 zum Hohlraum 58 transportiert wird (siehe Pfeile F in den Figuren 2 und 4). Von dort aus gelangt es über einen oder mehrere Ablaufkanäle 62, 64 (in diesem konkreten Fall sind es ein erster Ablaufkanal 62 und ein zweiter Ablaufkanal 64) in den Sammeltrichter 66, in dem es sich abgeschirmt vom Getrieberaum ansammeln kann und über den Ablauf 84 gezielt in den Bereich der Lagerstelle 30 zum gemeinsamen Wellenlager geleitet wird (siehe Pfeile G in den Figuren 2,3 und 4).

## Patentansprüche

1. Getriebeeinrichtung (10), mit einem ein Getrieberaum (17) umgebendes Getriebegehäuse (11), einer im Getrieberaum (17) angeordneten Antriebswelle (18) mit Antriebsverzahnung (44), einer im Getrieberaum (17) angeordneten Vorgelegewelle (38) mit einer ersten und einer zweiten Vorgelegeverzahnung (46, 48) und einer im Getrieberaum (17) angeordneten Abtriebswelle (20) mit Abtriebsverzahnung (50), wobei die Antriebsverzahnung (44) mit der ersten Vorgelegeverzahnung (46) und die zweite Vorgelegeverzahnung (48) mit der Abtriebsverzahnung (50) in Eingriff steht und wobei die Antriebswelle (18) in einem in der Abtriebswelle (20) angeordneten Wellenlager (36) gelagert ist, **dadurch gekennzeichnet, dass** in einem oberhalb der Abtriebswelle (20) angeordneten Teil des Getriebegehäuses (11) ein im Wesentlichen vom Getrieberaum (17) abgetrennter Hohlraum (52) ausgebildet ist, der über eine entgegen einer Drehrichtung der An- und Abtriebsverzahnung (44, 50) ausgerichteten Öffnung (58) mit dem Getrieberaum (17) verbundenen ist, wobei unterhalb des Hohlraums (52) ein Sammeltrichter (66) angeordnet ist, wobei ferner der Hohlraum (52) wenigstens einen Ablaufkanal (62, 64) umfasst, der in den Getrieberaum (17) zum Sammeltrichter (66) führt und wobei der Sammeltrichter (66) einen Ablauf (84) aufweist, der in einen Bereich des Wellenlagers (36) führt.

2. Getriebeeinrichtung (10) nach Anspruch 1, **dadurch gekennzeichnet, dass** der Hohlraum (52) einen ersten Ablaufkanal (62) umfasst, der in den Getrieberaum (17) zum Sammeltrichter (66) führt, wobei ein Ausgang des ersten Ablaufkanals (62) auf eine zum Getrieberaum (17) geöffnete und dem Hohlraum (52) zugewandte Trichteröffnung (70) des Sammeltrichters (66) ausgerichtet ist.

3. Getriebeeinrichtung (10) nach Anspruch 1 oder 2, **dadurch gekennzeichnet, dass** der Hohlraum (52) einen zweiten Ablaufkanal (64) umfasst, der in den Getrieberaum (17) zum Sammeltrichter (66) führt, wobei der zweite Ablaufkanal (64) durch eine Seitenwand (72) des Sammeltrichters (66) in diesen mündet.

4. Getriebeeinrichtung (10) nach einem der vorhergehenden Ansprüche, **dadurch gekennzeichnet, dass** das Wellenlager (36) als Nadellager ausgebildet ist.

5. Getriebeeinrichtung (10) nach einem der vorhergehenden Ansprüche, **dadurch gekennzeichnet, dass** die Antriebsverzahnung (44) mit der ersten Vorgelegeverzahnung (46) und/oder die zweite Vorgelegeverzahnung (48) mit der Abtriebsverzahnung (50) eine Übersetzungsstufe mit einem Übersetzungsverhältnis kleiner 1 darstellt.
